# EUROPÄISCHE PATENTANMELDUNG

(11) **EP 3 869 290 A1**
(43) Veröffentlichungstag der Anmeldung: **25.08.2021**
(21) Anmeldenummer: 20157933.1
(22) Anmeldetag: 18.02.2020
(51) Int. Cl.: G05D 1/02, G06K 9/00

(54) **METHODE ZUR AUTONOMEN POSITIONIERUNG EINES ROBOTERS SOWIE ROBOTER**

(71) Anmelder: Inventio AG, 6052 Hergiswil (CH)
(72) Erfinder: CHIAPPA, Alberto, 1024 Ecublens VD (CH); MOUSSALLI, Joachim, 1607 Palézieux-Village (CH); KUSSEROW, Martin, 6005 Luzern (CH)

(57) **Zusammenfassung**

Methode zur autonomen Positionierung eines Roboters (100) in Relation zu einem Stockwerkstableau (140) eines Aufzugsystems, umfassend: Erstellen eines Umgebungsabbilds (105) eines Teils der Umgebung des Roboters (100), Aufteilen des Umgebungsabbilds (105) in Umgebungsabbild-Segmente (111, 112, 113), wobei die Umgebungsabbild-Segmente in ihrer Form vertikalen Säulen entsprechen, die entlang einer horizontalen Richtung aufgereiht sind, Ermitteln eines Scoring-Werts für jedes Umgebungsabbild-Segment (111, 112, 113), wobei die Ermittlung mittels eines Bilderkennungsalgorithmus geschieht und der Scoring-Wert ein Konfidenzwert für das Vorhandenseins eines Stockwerkstableaus (140) in dem jeweiligen Umgebungsabbild-Segment (111, 112, 113) ist, sowie Positionierung des Roboters basierend auf den Scoring-Werten.

## Beschreibung

Die vorliegende Erfindung betrifft eine Methode zur autonomen Positionierung eines Roboters in Relation zu einem Stockwerkstableau eines Aufzugssystems, sowie einen Roboter, welcher eine Positioniereinheit umfasst, um diesen zu positionieren.

Selbstfahrende Roboter sind in der Lage, sich autonom und damit größtenteils unabhängig von Steuersignalen, die sonst durch einen Bediener während der Fahrt zur Verfügung gestellt werden müssen, zu bewegen. Dadurch sind sie geeignet, je nach Ausführung gewisse Aufgaben selbstständig zu übernehmen und so z.B. das menschliche Personal zu entlasten.

In vielen Umgebungen setzt dies jedoch voraus, dass der Roboter dazu befähigt ist, auf mehreren Stockwerken eines Gebäudes zu agieren, was in weiterer Folge bedeutet, dass ein solcher Roboter dazu in der Lage sein muss, selbstständig einen Aufzug zu bedienen und dazu die Fahrt hin zum, in, mit und aus dem Aufzug beherrschen muss.

In einem vereinfachten Fall umfasst die autonome Navigation, dem Roboter eine Karte seiner Umgebung zur Verfügung zu stellen, sodass dieser nach der Bestimmung seiner Ist-Position und Ausrichtung selbstständig eine Route zu seinem Zielort planen und diese entlangfahren kann. Um sich erfolgreich in seinem Umfeld zu bewegen, benötigt der Roboter zur Bestimmung seiner Ist-Position jedoch zahlreiche Informationen aus seiner Umgebung. Oft werden solche Informationen gewonnen, indem ein 3D-Abbild der unmittelbaren Umgebung z.B. mittels LIDAR-Scanning erstellt wird, jedoch sind derartige Sensoren nach wie vor sehr teuer und demnach nur für Anwendungen nützlich, die den hohen Preis rechtfertigen. Als Alternative dazu hat sich deshalb in den letzten Jahren Methoden zur Erkennung von Bildelementen innerhalb von Aufnahmen der sichtbaren Umgebung des Roboters mittels Bilderkennungsalgorithmen etabliert, die auf diese Weise ebenfalls dazu genutzt werden können, Informationen zur Position des Roboters in seinem Umfeld zu erhalten.

Insbesondere in dem zuvor genannten Kontext, in dem die Fahrt mit einem Aufzug zu den Aufgaben des Roboters zählt, kann die Erkennung von Elementen des Aufzugssystems einen wichtigen Beitrag zur Navigation des Roboters beitragen. Insbesondere Stockwerkstableaus, bei denen es sich oft auch gleichzeitig um diejenige Bedieneinheit zum Ruf eines Aufzugs handelt, mit der der Roboter in weiterer Folge interagieren soll, stellen solche Elemente dar.

Ein Beispiel für die Erkennung eines Stockwerkstableaus durch einen selbstfahrenden Roboter findet man in CN105867390A. Ein weiteres Beispiel ist in Kang et al.: «Navigation strategy for the service robot in the elevator environment», 2007, DOI: 10.1109/IC-CAS.2007.4407062 beschrieben. Beide Methoden verwenden jedoch visuelle Markierungen an den zu erkennenden Objekten, um die Erkennung zu erleichtern. Die Verwendung von solchen Markierungen setzt eine aufwändige Präparation der Umgebung voraus und ist oft ästhetisch störend.

Ein Verzicht auf derartige Markierungen erschwert jedoch die Objektfindung, sodass die Qualität der Erkennung sinkt und eine höhere Rechenleistung erforderlich ist. Im soeben beschriebenen Zusammenhang sind deshalb Lösungen zur Verbesserung der Objekterkennung, insbesondere der Erkennung eines Stockwerkstableaus, gewünscht. Die vorliegende Erfindung, besonders die in Anspruch 1 beschriebene Methode, sowie der in Anspruch 15 beschriebene Roboter, löst das genannte Problem.

Ein Aspekt der Erfindung betrifft eine Methode zur autonomen Positionierung eines Roboters in Relation zu einem Stockwerkstableau eines Aufzugsystems. Die Methode umfasst das Erstellen eines Umgebungsabbilds eines Teils der Umgebung des Roboters, das Aufteilen des Umgebungsabbilds in Umgebungsabbild-Segmente, wobei die Umgebungsabbild-Segmente in ihrer Form vertikalen Säulen entsprechen, die entlang einer horizontalen Richtung aufgereiht sind, und das Ermitteln eines Scoring-Werts für jedes Umgebungsabbild-Segment, wobei die Ermittlung mittels eines Bilderkennungsalgorithmus geschieht und der Scoring-Wert ein Konfidenzwert für das Vorhandenseins eines Stockwerkstableaus in dem jeweiligen Umgebungsabbild-Segment ist. Zuletzt findet eine Positionierung des Roboters basierend auf den Scoring-Werten statt.

Ein zweiter Aspekt der Erfindung betrifft einen Roboter, welcher eine Kamera umfasst, die zum Erstellen eines Umgebungsabbilds eines Teils der Umgebung des Roboters eingerichtet ist, sowie eine erste Bildauswertungseinheit, die dazu eingerichtet ist, das Umgebungsabbild in Umgebungsabbild-Segmente aufzuteilen, wobei die Umgebungsabbild-Segmente in ihrer Form vertikalen Säulen entsprechen, die entlang einer horizontalen Richtung aufgereiht sind und eine zweite Bildauswertungseinheit, die dazu eingerichtet ist, für die Umgebungsabbild-Segmente einen Scoring-Wert zu bestimmen, der ein Konfidenzwert für das Vorhandenseins eines Stockwerkstableaus in dem jeweiligen Umgebungsabbild-Segment ist. Ferner umfasst der Roboter eine Positioniereinheit, die dazu eingerichtet ist, den Roboter in Abhängigkeit der Scoring-Werte der Umgebungsabbild-Segmente zu positionieren.

In einem Ausführungsbeispiel umfasst die Methode zur Positionierung des Roboters das Erstellen eines Umgebungsabbilds eines Teils der Umgebung des Roboters.
Hierzu wird typischerweise eine Kamera, vorzugsweise eine Digitalkamera benutzt, die beispielsweise einen CMOS- oder CCD-Sensor beinhaltet und das Umgebungsabbild beispielsweise in Form einer Datei oder eines Datenstroms bereitstellt.

Das Umgebungsabbild beinhaltet typischerweise drei Farbkanäle, es kann jedoch auch vorteilhaft sein, ein das Abbild als Graustufenbild auszugestalten, wobei zusätzlich auch eine Filterung gemäß eines oder mehrerer Farbkanäle möglich ist, sodass das Graustufenabbild z.B. dem R, G oder B-Kanal eines Farbbilds entspricht, oder auch einer kanalweise beliebig gewichteten Kombination aus den einzelnen Farbkanälen. Es ist möglich, dass die Filterung nach der Erstellung des Abbilds in einer getrennten Bildauswertungseinheit geschieht, oder dass bereits die Kamera bzw. deren Sensor so ausgestaltet ist, dass eine günstige Farbfilterung auftritt. Weiterhin kann es vorteilhaft sein, das Umgebungsabbild in einem Wellenlängenbereich aufzuzeichnen, der nicht dem sichtbaren Wellenlängenbereich entspricht, beispielsweise im Nahinfrarotbereich oder im Ultraviolettbereich.
Das Umgebungsabbild kann durch die Kamera in schneller Abfolge bereitgestellt werden, sodass es sich bei dem Umgebungsabbild auch um ein Videosignal, also ein Bewegtbild mit einer bekannten Bildwiederholfrequenz handeln kann.

Das Umgebungsabbild gibt vorzugsweise einen günstigen Ausschnitt der Umgebung des Roboters wieder. Beispielsweise kann der Ausschnitt einen Winkel von etwa 90° in horizontaler Richtung und etwa 40° in vertikaler Richtung umspannen. Ein günstiger Ausschnitt kann in horizontaler sowie in vertikaler Richtung jeweils auch zwischen 10° und 180°, insbesondere auch zwischen 30° und 120° oder zwischen 50° und 80° liegen.
Es ist auch möglich, dass das Umgebungsabbild des Roboters in horizontaler Richtung vollumspannend aufgezeichnet wird, also einem Winkel von 360° entspricht. Die Kamera kann dazu eingerichtet sein, das Umgebungsabbild in den genannten Abmessungen aufzuzeichnen. Es kann auch vorteilhaft sein, zur Erstellung des Umgebungsabbilds eine Vielzahl von Kameras zu verwenden, sodass sich das Umgebungsabbild aus mehreren Einzelabbildern zusammensetzt. Es kann vorteilhaft sein, die Kameras mit Linsen auszustatten, die eine günstige Verzeichnung bewirken, sodass manche Bereiche des Umgebungsabbilds hervorgehoben werden.

Die Kamera ist typischerweise an einer günstigen Position am Roboter installiert. Vorzugsweise befindet sie sich in einer Höhe, die in etwa der erwarteten Höhe der zu erfassenden Objekte entspricht, beispielsweise in einem Bereich von 50cm bis 150cm.

Vorzugsweise befindet sich die Kamera unweit von der vertikalen Drehachse des Roboters und zeigt dabei in die Bewegungsrichtung, sodass die vertikale Mittellinie des Umgebungsabbilds in etwa der Fahrtrichtung des Roboters entspricht. Es ist jedoch auch möglich, dass die Kamera an anderen, peripheren Positionen des Roboters installiert ist, sofern dies konstruktionsbedingt von Vorteil ist. Typischerweise ist die Kameraposition so gewählt, dass die horizontale Achse des von der Kamera erzeugten Umgebungsabbilds parallel zum tatsächlichen Horizont der Umgebung des Roboters verläuft, also die vertikale Achse der Lotrichtung entspricht. Die Kameraposition und -ausrichtung kann von dieser Idealposition abweichen, sofern dies in den weiteren Schritten der Methode berücksichtigt bzw. kompensiert wird.

In einem weiteren Ausführungsbeispiel umfasst die Methode das Aufteilen des Umgebungsabbilds in Umgebungsabbild-Segmente. Die Unterteilung in Segmente geschieht hierbei in hauptsächlich vertikaler Richtung, sodass die Form der einzelnen Segmente vertikalen Säulen entspricht, die entlang einer horizontalen Richtung aufgereiht sind. Eine weitere Unterteilung der Säulen in horizontaler Richtung findet nicht statt. In einer Ausführungsform können die jeweiligen Segmente das Umgebungsabbild in vertikaler Richtung durchgängig umspannen. Die Segmente können so aufgereiht sein, dass eine lineare Abfolge von Segmenten entlang der horizontalen Richtung entsteht, denen ein jeweiliger Bereich in horizontaler Richtung eindeutig zuordenbar ist.

In ihrer einfachsten Form können die Säulen gleichgroßen, horizontal aufgereihten Rechtecken entsprechen. Es ist jedoch auch denkbar, dass die Säulen eine andere Form aufweisen, z.B. konvex gewölbt sind, und dass einzelne Säulen sich in ihrer Form und Größe von anderen Säulen unterscheiden. In einem Beispiel können eine oder mehrere Säulen eine Aussparung in einem Teilbereich enthalten, sodass der ausgesparte Bereich durch eine Einsparung in der Nachbarsäule ausgeglichen wird. Typischerweise ist es jedoch von Vorteil, wenn die einzelnen Säulen gleich geformt sind.

Bereiche der einzelnen Säulen können sich mit denen von anderen Säulen überlappen, typischerweise findet eine solche Überlappung in den Randbereichen der Säulen, also in horizontaler Richtung statt. Die Überlappung kann einem signifikanten Bereich der Fläche der jeweiligen Säulen entsprechen, beispielsweise bis zu 2%, aber auch bis zu 5% oder bis zu 10%. Der überlappende Bereich muss dabei nicht zwangsweise der Form der Säule entsprechen, es kann beispielsweise von Vorteil sein, dass im zentralen Bereich der Säule ein größerer Überlapp erlaubt wird als im oberen und unteren Randbereich der Säule.

Die Unterteilung kann durch Schwärzung der Bereiche erfolgen, die nicht Teil der jeweiligen Säule sind, sodass aus einem Umgebungsabbild mehrere Umgebungsabbild-Teilbilder erstellt werden, deren Anzahl der Anzahl an Säulen entspricht und deren Abmessung identisch zum ursprünglichen Umgebungsabbild sind. Schwärzung bedeutet in diesem Zusammenhang, dass der Bereich, der außerhalb der jeweiligen Säule liegt, so markiert wird, dass er von einem Bilderkennungsalgorithmus ignoriert wird, es ist somit darunter nicht zwangsläufig eine Überzeichnung mit einem schwarzen Farbwert zu verstehen. Die Unterteilung kann auch dadurch erfolgen, dass der Bereich des Umgebungsabbilds ausgeschnitten wird, welcher sich nicht innerhalb der jeweiligen Säule befindet, sodass aus einem Umgebungsabbild mehrere Umgebungs-Teilabbilder entstehen, deren Anzahl der Anzahl an Säulen entspricht und deren Abmessung geringer ist als die des ursprünglichen Umgebungsabbilds. Eine Kombination aus Ausschneiden und Schwärzen ist möglich. Weitere Möglichkeiten zur Unterteilung des Umgebungsabbilds und Kombinationen daraus sind für den Fachmann offensichtlich, beispielsweise kann die Unterteilung in Säulen auch dadurch erfolgen, dass der Bereich einer einzelnen Säule so verzerrt wird, dass er das ursprüngliche Umgebungsabbild teilweise oder ganz ausfüllt und den Bereich, der außerhalb der Säule liegt, teilweise oder ganz überdeckt.

Die Anzahl an Segmenten beträgt mindestens 2 und vorzugsweise 3 - 6. Es kann jedoch auch von Vorteil sein, das Umgebungsabbild in eine höhere Anzahl von Segmenten zu teilen, beispielsweise 7-12 Segmente, oder über 12 Segmente.

Die Wahl einer ungeraden Anzahl an Segmenten kann in den meisten Fällen vorteilhaft sein, da so in der Regel ein Mittelsegment vorhanden ist, das der Bewegungsrichtung des Roboters entspricht, sodass beim Erkennen eines Elements innerhalb des Segments geschlussfolgert werden kann, dass sich der Roboter in die Richtung des Elements bewegt.

Die Unterteilung des Umgebungsabbilds in Segmente findet in einer dafür vorgesehenen, ersten Bildauswertungseinheit statt. Bei der ersten Bildauswertungseinheit kann es sich um eine getrennte Einheit handeln, die über geeignete Schnittstellen mit der Kamera und weiteren Einheiten des Roboters, beispielsweise einer zweiten Bildauswertungseinheit, kommuniziert. Die erste Bildauswertungseinheit kann auch mit anderen Einheiten des Roboters, beispielsweise einer zweiten Bildauswertungseinheit, kombiniert sein. Die erste Bildauswertungseinheit kann ganz oder teilweise in Form eines dafür vorgesehenen, vorzugsweise integrierten Schaltkreises, z.B. eines FPGA, ASIC oder entsprechend eingerichteten Controllers implementiert sein. Die erste Bildauswertungseinheit kann auch in Form von Software gestaltet sein, die, getrennt oder zusammen mit anderen Einheiten des Roboters, auf einem dazu geeigneten Computersystem ausgeführt wird.

In einem weiteren Ausführungsbeispiel umfasst die Methode das Ermitteln eines Scoring-Werts für jedes Umgebungsabbild-Segment. Die Ermittlung des Scoring-Werts geschieht mittels eines Bilderkennungs-Algorithmus und gibt die Wahrscheinlichkeit für das Vorhandenseins eines Stockwerkstableaus in dem jeweiligen Umgebungsabbild-Segment wieder.

Bei dem Bilderkennungs-Algorithmus kann es sich um jeden Algorithmus (oder eine Kombination aus mehreren Algorithmen) handeln, welcher dazu geeignet ist, das Vorhandensein und das Nichtvorhandensein eines Stockwerkstableaus eines Aufzugssystems als abgebildetes Element in einem der zuvor beschriebenen Umgebungsabbild-Segmente mit genügend großer statistischer Wahrscheinlichkeit voneinander zu unterscheiden. Für den Fall, dass der Algorithmus als binärer Klassifikator ausgeführt ist, kann die geforderte Leistung des Algorithmus als eine Kombination aus Spezifität und Selektivität ausgedrückt werden. Typischerweise hat der Algorithmus eine Korrektklassifikationsrate (richtig positiv + richtig negativ) von zumindest 80 %, vorzugsweise aber auch von über 90 %, 95 % oder 99 %.

In einer weiteren Ausführungsform kann es vorteilhaft sein, dass der Bilderkennungsalgorithmus einen Wahrscheinlichkeitswert für das Vorhandensein eines Stockwerkstableaus im jeweiligen Umgebungsabbild-Segment als Ergebnis liefert. In diesem Fall kann der erhaltene Scoring-Wert als Wert in einem beliebigen Bereich, z.B. im Bereich zwischen 0 und 1 (oder 0 - 100 %) ausgedrückt werden, wobei der Wert dann vorzugsweise einem Konfidenzwert für das Vorhandensein eines Stockwerkstableaus entspricht.

Typischerweise umfasst der Bilderkennungsalgorithmus einen Objekterkennungsalgorithmus, der durch Maschinelles Lernen oder *Deep Learning,* in weiterer Folge als «Training» bezeichnet, zur Erkennung von Stockwerkstableaus in Umgebungsabbild-Segmenten eingerichtet wurde. Beispiele für zur Objekterkennung geeignete Erkennungsalgorithmen sind die Viola-Jones-Methode, *Scale-invariant feature transform* (SIFT), *Histogram of oriented gradients* (HOG), Implementierungen von *Convolutional Neuronal Networks* (CNNs), darunter insbesondere VGG16, SqueezeNet, GoogLeNet etc., sowie *Single Shot MultiBox Detector* (SSD). Die genannte Auflistung ist nicht abschließend, zahlreiche weitere Methoden zur Verwendung, Gestaltung und Implementierung eines geeigneten Algorithmus erschließen sich dem Fachmann.

Das Training der genannten Algorithmen kann dadurch geschehen, dass eine Vielzahl von Bildern von Stockwerkstableaus als Positivbeispiele und eine Vielzahl von Bildern ohne Stockwerkstableaus als Negativbeispiele in Form eines Datensatz zur Verfügung gestellt werden, auf Basis dessen eine oder mehrere Lernphasen durchlaufen werden. Zusätzlich zum Objekterkennungsalgorithmus kann der Bilderkennungs-Algorithmus weitere Algorithmen umfassen, z.B. eingangsseitig geschaltete Farb- oder Bandpass-Filter, sowie eingangs- oder ausgangsseitig geschaltete Scoring-Filter, die z.B. das fehlerhafte Erkennen von Stockwerkstableaus an unmöglichen Stellen (z.B. Boden, Fahrstuhltür, etc.) verhindern.

Die Ermittlung des Scoring-Werts findet in einer dafür vorgesehenen, zweiten Bildauswertungseinheit statt. Bei der zweiten Bildauswertungseinheit kann es sich um eine getrennte Einheit handeln, die über geeignete Schnittstellen mit der ersten Bildauswertungseinheit und weiteren Einheiten des Roboters, beispielsweise einer Positioniereinheit, kommuniziert. Die erste Bildauswertungseinheit kann auch mit anderen Einheiten des Roboters, beispielsweise der ersten Bildauswertungseinheit, kombiniert sein. Die zweite Bildauswertungseinheit kann ganz oder teilweise in Form eines dafür vorgesehenen, vorzugsweise integrierten Schaltkreises, z.B. eines FPGA, ASIC oder entsprechend eingerichteten Controllers implementiert sein. Die zweite Bildauswertungseinheit kann auch in Form von Software gestaltet sein, die, getrennt oder zusammen mit anderen Einheiten des Roboters, auf einem dazu geeigneten Computersystem ausgeführt wird.

In einem weiteren Ausführungsbeispiel umfasst die Methode die Positionierung eines Roboters basierend auf den zuvor ermittelten Scoring-Werten. Typischerweise werden die für das jeweilige Umgebungsabbild-Segment ermittelten Scoring-Werte als Eingangssignal für einen Positionierungsschritt benutzt, welcher die Ist-Positionsfindung, Routenberechnung oder räumliche Umpositionierung des Roboters umfasst. Es können Scoring-Werte für jedes Segment zur Verfügung gestellt werden. Es können auch nur Teilmengen von Scoring-Werten zur Verfügung gestellt werden, beispielsweise dann, wenn ein Umgebungsabbild-Segment gefunden wurde, das einen hohen Scoring-Wert hat, und somit auf die Ermittlung von Scoring-Werten in anderen Segmenten verzichtet wurde. Es kann weiterhin denkbar sein, dass mehrere Umgebungsabbild-Segmente hohe Scoring-Werte haben, beispielsweise dann, wenn das Umgebungsabbild mehrere Stockwerkstableaus zeigt.

Die Positionierungseinheit kann dazu eingerichtet sein, auf Basis der Scoring-Werte festzustellen, ob kein Umgebungsabbild-Segment ein Stockwerkstableau enthält, ob ein Umgebungsabbild-Segment ein einzelnes Stockwerkstableau enthält, ob eine Mehrzahl von Umgebungsabbild-Segmenten, z.B. benachbarte Umgebungsabbild-Segmente, ein einzelnes Stockwerkstableau enthalten, oder ob eine Mehrzahl von Umgebungsabbild-Segmenten mehrere unterschiedliche Stockwerkstableaus enthalten.
In einem günstigen Ausführungsbeispiel wird das Umgebungsabbild so erzeugt und die Aufteilung in Umgebungsabbild-Segmente so durchgeführt, dass jedes einzelne Segment einem bekannten Kreisausschnitt, also horizontalen Richtungsbereich der Umgebung des Roboters, wie z.B. einem Bereich in der Umgebung des Roboters mit einer Richtung von 9±3° entspricht.

In dem genannten Ausführungsbeispiel beinhaltet ein hoher Scoring-Wert in einem Umgebungsabbild-Segment folglich die Information darüber, dass sich in einem bekannten Richtungsbereich ein Stockwerkstableau befindet. Diese Information kann zur Positionierung beispielsweise dahingehend genutzt werden, dass alleine auf Basis dieses Wertes, oder in Kombination mit weiteren Eingangssignalen, eine Ist-Position des Roboters abgeleitet werden kann, sowie auf einfache Weise eine Route hin zu dem Stockwerkstableau geplant und abgefahren werden kann, und auf einfache Weise eine Ausrichtung des Roboters hin zu dem jeweiligen Stockwerkstableaus erfolgen kann.

Die Positionierung des Roboters findet durch eine dafür vorgesehenen Positioniereinheit statt, wobei die Ausführung eines physikalischen Ortswechsels zusätzlich das Wirken weitere Einheiten, z.B. Antriebseinheiten umfassen kann, die nicht Teil dieser Erfindung sind. Bei der Positioniereinheit kann es sich um eine getrennte Einheit handeln, die über geeignete Schnittstellen mit der zweiten Bildauswertungseinheit und weiteren Einheiten des Roboters, beispielsweise einer Antriebseinheit, kommuniziert. Die Positioniereinheit kann auch mit anderen Einheiten des Roboters, beispielsweise der ersten oder zweiten Bildauswertungseinheit, kombiniert sein. Die Positioniereinheit kann ganz oder teilweise in Form eines dafür vorgesehenen, vorzugsweise integrierten Schaltkreises, z.B. eines FPGA, ASIC oder entsprechend eingerichteten Controllers implementiert sein. Die Positioniereinheit kann auch in Form von Software gestaltet sein, die, getrennt oder zusammen mit anderen Einheiten des Roboters, auf einem dazu geeigneten Computersystem ausgeführt wird.

Die Methode zur autonomen Positionierung des Roboters kann bedarfsweise ausgeführt werden, beispielsweise in Folge eines Steuersignals, aber auch intervallweise wiederholt werden, beispielsweise mit einer Frequenz von 1 - 5 Hz, aber auch mit einer höheren Frequenz, z.B. mit 5 - 10 Hz oder mehr als 10 Hz.

Die Unterteilung des Umgebungsabbilds in vorwiegend vertikale Segmente bzw. Säulen, die darauf folgende Bilderkennung und die Positionierung des Roboters in Abhängigkeit von den für die jeweiligen Umgebungsabbild-Segmente ermittelten Scoring-Werten haben zur Folge, dass bei der Erkennung des gesuchten Stockwerkstableaus in einem der Segmente direkt geschlussfolgert werden kann, dass sich ein solches Element innerhalb des vom Segment umspannten, horizontalen Kreisausschnittes des Roboters befindet. Dadurch ist es möglich, sofort aus dem reinen, typischerweise binären «Objekt-Vorhanden»-Signal eine ausreichend genaue Richtung dieses Objekts in Relation zum Roboter abzuleiten.

Durch die hier beschriebene Erfindung wird somit die Komplexität und in weiterer Folge die benötigte Rechenleistung zur Positionierung eines Roboters in Relation zu einem Stockwerkstableau eines Aufzugssystems auf mehrere Weisen reduziert:
Die Unterteilung des Umgebungsabbilds in Segmente, deren Form vertikalen Säulen entspricht, reduziert die Anzahl an nötigen Teilbildern, für die eine Bilderkennung durchgeführt werden muss, insbesondere im Vergleich zur sonst üblichen, quadratischen Rasterung, beispielsweise in 32 x 32 Pixel große Felder.

Dennoch besteht weiterhin der Vorteil, dass durch den Bilderkennungsalgorithmus nicht das gesamte Umgebungsabbild analysiert werden muss, sondern sofort nach dem Finden eines Stockwerkstableaus ein Ergebnis zur Verfügung steht. Dies hat den Vorteil, dass die einzelnen Umgebungsabbildsegmente parallel verarbeitet werden können, oder dass bei einer seriellen Verarbeitung bereits nach dem Finden eines ersten, hohen Scoring-Werts auf die Erkennung von weiteren Segmenten verzichtet werden kann.

Außerdem entfällt die Notwendigkeit, zusätzlich zur Erkennung des gesuchten Bildelements als Folgeschritt auch noch eine Positionsbestimmung des gefundenen Elements durchführen zu müssen, da bereits das Vorhandensein in einem Bildausschnitt direkt als Ergebnis verwendet werden kann.

Auch das Training eines Bilderkennungsalgorithmus selbst vereinfacht sich durch die beschriebene Erfindung dadurch, dass als Ausgangsmaterial für den Lernprozess keine große Menge an händisch aufbereiteten Bildern, in denen z.B. die Stockwerkstableaus aufwändig markiert wurden, bereitgestellt werden muss, sondern dass das lediglich eine Anzahl von Bildern mit Stockwerkstableau sowie eine Anzahl von Bildern ohne Stockwerkstableau als Beispiele verfügbar sein müssen, die zudem in Form und Abmessung sehr divergent sein können. Da der benötigte Aufwand zur Aufbereitung dieser Bilder gering ist, kann die Anzahl an Bildern beliebig groß gewählt werden, wodurch im Allgemeinen die Erkennungsqualität des Bilderkennungsalgorithmus steigt.

### Kurzbeschreibung der Figuren

- Fig. 1:: Beispiel für einen Roboter, der zur autonomen Positionierung in Abhängigkeit eines Stockwerkstableaus eingerichtet ist
- Fig. 2:: Blockdiagramm der Methode zur Positionierung eines Roboters
- Fig. 3:: Beispiele für das Scoring eines in Segmente unterteilten Umgebungsabbilds

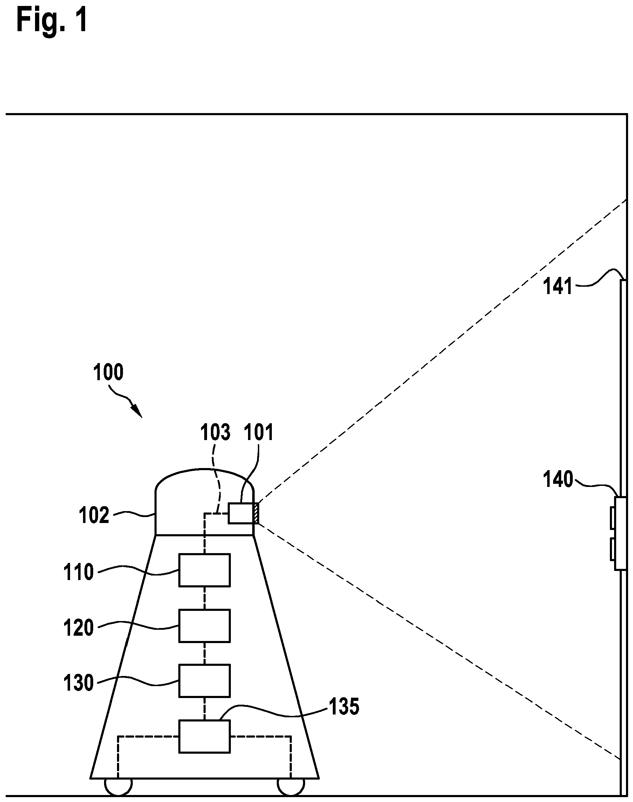

Der in Fig. 1 in Seitenansicht dargestellte Roboter 100 ist eine Ausführungsform der Erfindung. Der Roboter umfasst eine Kamera 101, die mit einer Bildwiederholfrequenz von z.B. 30 Hz ein digitales Umgebungsabbild 105 erstellt, welches eine Auflösung von 640x480 Pixeln mit einer Farbtiefe von 24 Bit im RGB-Farbraum aufweist. Je nach Situation und Ausführungsform kann die Kamera 101 auch Umgebungsabbilder mit geringerer, beispielsweise 320x240 Pixeln, oder höherer Auflösung, beispielsweise 1024x768 Pixeln oder mehr anzufertigen. Auch Farbtiefe und Bildwiederholfrequenz können situationsabhängig variieren.

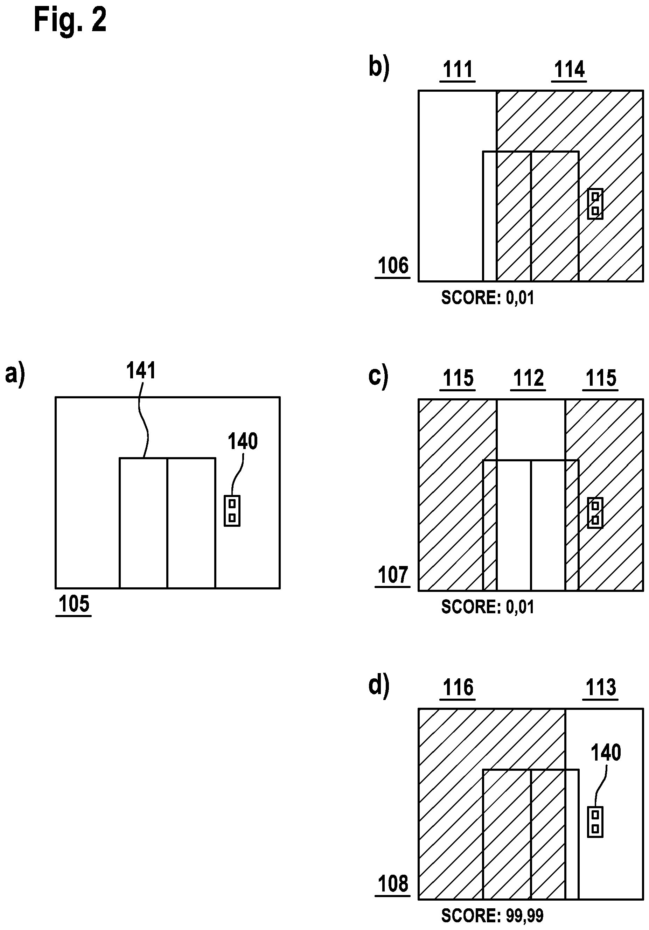

Ein Beispiel für ein Umgebungsabbild ist in Fig. 2a gezeigt. Das Umgebungsabbild 105 im gezeigten Beispiel umfasst eine neutrale, weiße Wand, eine Aufzugstüre 141 und ein Stockwerkstableau 140. Die Kamera ist im Kopfbereich 102 des Roboters installiert und so ausgerichtet, dass die vertikale Mittellinie des Abbilds 105 der Bewegungsrichtung des Roboters entspricht. Das Umgebungsabbild umspannt z.B. einen Winkel von 90° in horizontaler und 60° in vertikaler Richtung. Die Kamera ist über ein kabelgebundenes TCP/IP-Netzwerk 103 mit weiteren Komponenten des Roboters verbunden und stellt das Umgebungsabbild als Video-Stream zur Verfügung.

Die erste Bildauswertungseinheit 110 empfängt das Umgebungsabbild 105 und unterteilt dieses in Echtzeit in drei Umgebungsabbild-Segmente 111, 112, 113. Die Umgebungsabbild-Segmente umfassen in dem gezeigten Beispiel jeweils ca. ein Drittel (links, mitte, rechts) des ursprünglichen Umgebungsabbilds 105 in horizontaler Richtung und sind in vertikaler Richtung nicht unterteilt. Die Aufteilung in die Segmente findet statt, indem eine Anzahl von Umgebungsabbild-Teilbildern 106, 107, 108 erstellt wird, in denen die außerhalb der Segmente liegenden Bereiche 114, 115, 116 geschwärzt werden. Die genannten Umgebungsabbild-Teilbilder sind in Fig. 2b-d gezeigt. Die Einheit 110 stellt die Umgebungsabbild-Teilbilder 106, 107, 108 über Netzwerk 103 den weiteren Komponenten als Video-Stream zur Verfügung.

Die zweite Bildauswertungseinheit 120 empfängt die Umgebungsabbild-Segmente 111, 112, 113 in Form der Umgebungsabbild-Teilbilder 106, 107, 108 und benutzt diese dazu, einen Scoring-Wert für das jeweilige Segment zu bestimmen. Der Scoring-Wert entspricht einem Konfidenzwert für das Vorhandensein eines Stockwerkstableaus, z.B. Stockwerkstableau 140, im jeweiligen Umgebungsabbild-Segment und wird als Wert im Bereich von 0,00 bis 100,00 wiedergegeben.

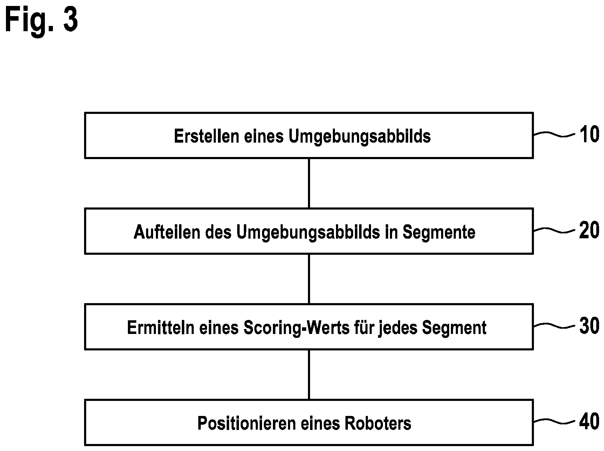

Die Bestimmung des Scoring-Werts erfolgt durch eine Implementierung der VGG16 Architektur, bei der es sich um ein *Convolutional Neural Network* (CNN) handelt, das zusätzlich auf die Erkennung von Stockwerkstableaus trainiert wurde. Eine mögliche Methode zum Trainieren des CNN ist im Zusammenhang mit einer Ausführungsform der in Fig. 3 gezeigten Methode beschrieben.

Im genannten Beispiel führt die Auswertungseinheit 120 das Scoring in Echtzeit durch und liefert somit mit einer Frequenz von z.B. 30 Hz jeweils einen Wert für jedes der Segmente 111, 112, 113. Im in Fig. 2 gezeigten Beispiel ist zu erkennen, dass der Scoring-Wert für die Segmente ohne Stockwerkstableau 111, 112 bei jeweils 0,01 liegt und der Scoring-Wert für das Segment 113, welches das Stockwerkstableau 140 zeigt, bei 99,99 liegt.

Die Einheit 120 stellt die Scoring-Werte über Netzwerk 103 den weiteren Komponenten des Roboters als Datenstrom zur Verfügung.

Die Positioniereinheit 130 empfängt die Scoring-Werte und wählt im gezeigten Beispiel aus den drei Werten den höchsten aus, im dargestellten Fall entspricht dies Segment 113. Durch die bekannte Position von Kamera 101 und die bekannten Abmessungen des Umgebungsabbilds, insbesondere der bekannten Information, dass die Kamera 101 ein Umgebungsabbild mit einem horizontalen Bildwinkel von 90° erzeugt, und dass Segment 113 dem rechten Drittel des Umgebungsabbilds entspricht, also einer Richtung von 15° - 45° in Relation zur Ausrichtung des Roboters, kann die Positioniereinheit nun folgern, dass die Richtung des Roboters 100 in Relation zu Stockwerkstableau 140 bei einem Winkel von -30°±15° liegt.

Diese Information wird zuerst von der Positioniereinheit 130 passiv genutzt und zusammen mit dem in der Positioniereinheit des Roboters gespeicherten Kartenmaterial der Umgebung sowie den zur Verfügung stehenden Werten von weiteren Positionssensoren genutzt, die Ist-Position und Ausrichtung des Roboters 100 zu bestimmen.

Sobald die Programmierung des Roboters dies fordert, werden die in Echtzeit ermittelten Scoring-Werte zur aktiven Ausrichtung des Roboters in Richtung des Stockwerkstableaus 140 genutzt. Hierzu stellt die Positioniereinheit 130 ein Signal an Antriebseinheit 135 zur Verfügung, welches bewirkt, dass der Roboter in die zuvor ermittelte Richtung des Stockwerkstableaus 140 gedreht wird. Das Steuersignal zur Drehung wird so lange bereitgestellt, bis der höchste erhaltene Scoring-Wert dem mittleren Umgebungsabbild-Segment 112 entspricht. Im genannten Beispiel kann dann gefolgert werden, dass der Roboter eine Ausrichtung von 0±15° in Relation zum Stockwerkstableau aufweist.

Fig. 3 zeigt eine Ausführungsform der erfindungsgemäßen Methode zur Positionierung eines Roboters. In Schritt 10 wird ein Umgebungsabbild eines Teils der Umgebung des Robotes erstellt. Das Umgebungsabbild wird durch eine Kamera aufgenommen und hat eine Auflösung von z.B. 320x240 Pixeln. Das Umgebungsabbild wird als digitale Datei abgespeichert, sodass sie für Schritt 20 zur Verfügung steht.

In Schritt 20 findet die Aufteilung des Umgebungsabbilds in Segmente statt. Die Segmente werden durch Zuschnitt bzw. Aufteilung der Umgebungsabbild-Datei in 5 Umgebungsabbild-Teilbilder erzeugt. Die Umgebungsabbild-Teilbilder sind in vertikaler Richtung ungeteilt und haben z.B. eine horizontale Breite von 70 Pixeln (Randsegmente) bzw. 76 Pixeln (Innensegmente), wobei jedes Segment zum Nachbarsegment in einer Breite von 6 Pixeln in jede der beiden Richtung überlappend ist. Andere Abmessungen von Umgebungsabbild und Umgebungsabbild-Teilbild sind situations- und ausführungsformabhängig möglich. Die Randsegmente überlappen nur einmal, nämlich hin zum jeweiligen Innensegment. Die Umgebungsabbild-Teilbilder werden jeweils als Datei abgespeichert, sodass sie für Schritt 30 zur Verfügung stehen.
In Schritt 30 werden die einzelnen Umgebungsabbild-Teilbilder durch einen

Bilderkennungsalgorithmus analysiert. Der Bilderkennungsalgorithmus ist eine Implementierung des VGG16 *Convolutional Neural Network* gemäß der Publikation K. Simonyan, A. Zisserman: «Very Deep Convolutional Networks for Large-Scale Image Recognition», 2014, arXiv: 1409.1556.

Der Bilderkennungsalgorithmus wurde für die vorliegende Problemstellung adaptiert, indem die publizierten Gewichtungen, wie sie durch die Autoren der obengenannten Publikation für den *ImageNet-Datensatz* erhalten wurden, durch nachträgliches Trainieren der 3 vollvernetzten Ebenen (*fully-interconnected layers* FC-4096, FC-4096, FC-1000) unter Zuhilfenahme eines Datensatzes bestehend aus 700 Bildern von Stockwerkstableaus in einer typischen Umgebung und 1400 Bildern von typischen Umgebungen ohne Stockwerkstableaus auf die Erkennung von Stockwerkstableaus angepasst wurden. Das Training wurde so lange durchgeführt, bis für einen Beispieldatensatz bestehend aus 100 Umgebungsabbildern eine Korrektklassifikationsrate von über 80% erreicht wurde.

Der Bilderkennungalgorithmus liefert einen binären Scoring-Wert für jedes Umgebungsabbild-Teilbild. Die Scoring-Werte werden in einer Datei abgespeichert, sodass sie für Schritt 40 zur Verfügung steht.

Schritt 40 dient dazu, ein Richtungssignal zur Positionierung des Roboters zu erzeugen. Die fünf Scoring-Werte dienen als Eingangssignal für einen PID-Controller. Der Controller ist so beschalten, dass die Scoring-Werte, die mit den äußeren zwei Umgebungsabbild-Segmenten korrespondieren, jeweils ein starkes Links- oder Rechtssignal erzeugen und dass die Scoring-Werte, die den inneren zwei Umgebungsabbild-Segmenten entsprechen, ein um 50 % im Vergleich zum starken Signal abgeschwächtes Links- oder Rechtssignal erzeugen. Der Scoring-Wert, welcher mit dem mittleren Umgebungsabbild-Segment korreliert, erzeug ein Nullsignal. Das so erhaltene Positionierungssignal wird in weiterer Folge zur Ausrichtung des Roboters in Relation zum Stockwerkstableau genutzt.

Zahlreiche weitere Ausführungsformen sind denkbar, welche sich insbesondere durch Kombination der beschriebenen Ausführungsbeispiele mit den im allgemeinen Teil der Beschreibung genannten Merkmalen ergeben.

## Patentansprüche

**1.** Methode zur autonomen Positionierung eines Roboters (100) in Relation zu einem Stockwerkstableau (140) eines Aufzugsystems, umfassend:
- Erstellen eines Umgebungsabbilds (105) eines Teils der Umgebung des Roboters (100),
- Aufteilen des Umgebungsabbilds (105) in Umgebungsabbild-Segmente (111, 112, 113), wobei die Umgebungsabbild-Segmente in ihrer Form vertikalen Säulen entsprechen, die entlang einer horizontalen Richtung aufgereiht sind,
- Ermitteln eines Scoring-Werts für jedes Umgebungsabbild-Segment (111, 112, 113), wobei die Ermittlung mittels eines Bilderkennungsalgorithmus geschieht und der Scoring-Wert ein Konfidenzwert für das Vorhandenseins eines Stockwerkstableaus (140) in dem jeweiligen Umgebungsabbild-Segment (111, 112, 113) ist,
- Positionierung des Roboters basierend auf den Scoring-Werten.

**2.** Methode nach Anspruch 1, wobei das Umgebungsabbild (105) aus einer Menge von digitalen, fotografischen Einzelbildern mit einer Auflösung von zumindest 320 mal 240 Pixeln besteht.

**3.** Methode nach Anspruch 1 oder 2, wobei das Umgebungsabbild das Umfeld des Roboters entlang einer horizontalen Ebene mit einem Winkel von zumindest 60° in horizontaler Richtung und zumindest 40° in vertikaler Richtung abbildet.

**4.** Methode nach einem der vorangehenden Ansprüche, wobei der Scoring-Wert binär ist, sodass ein erster Zustand eine Mindestwahrscheinlichkeit für das Fehlen eines Stockwerkstableaus (140) repräsentiert und ein zweiter Zustand eine Mindestwahrscheinlichkeit für das Vorhandensein eines Stockwerkstableaus (140) repräsentiert.

**5.** Methode nach einem der vorangehenden Ansprüche, wobei auf Basis aller Scoring-Werte bestimmt wird, dass kein Umgebungsabbild-Segment (111, 112, 113) ein Stockwerkstableau (140) enthält, dass ein einzelnes Umgebungsabbild-Segment (111, 112, 113) ein Stockwerkstableau (140) enthält, oder dass eine Mehrzahl von Umgebungsabbild-Segmenten (111, 112, 113) eine Mehrzahl von Stockwerkstableaus (140) enthalten.

**6.** Methode nach einem der vorangehenden Ansprüche, wobei das Umgebungsabbild (105) im sichtbaren Wellenlängenbereich aufgezeichnet wird.

**7.** Methode nach einem der vorangehenden Ansprüche, wobei das Umgebungsabbild (105) durch eine an dem Roboter (100) angebrachten Kamera (101) aufgezeichnet wird.

**8.** Methode nach Anspruch 7, wobei die Kamera (101) am Roboter (100) so positioniert ist, dass die horizontale Bewegungsrichtung des Roboters aus dem Umgebungsabbild (105) abgeleitet werden kann.

**8.** Methode nach einem der vorangehenden Ansprüche, wobei die Methode intervallweise wiederholt wird.

**9.** Methode nach einem der vorangehenden Ansprüche, wobei der Bilderkennungsalgorithmus ein Neuronales Netzwerk umfasst.

**10.** Methode nach Anspruch 9, wobei der Bilderkennungsalgorithmus ein Convolutional Neural Network (CNN) umfasst, welches auf das Erkennen von Stockwerkstableaus von Aufzugsystemen trainiert wurde.

**11.** Methode nach einem der vorangehenden Ansprüche, wobei das Stockwerkstableau (140) keine visuellen Marker aufweist.

**12.** Methode nach einem der vorangehenden Ansprüche, wobei das Umgebungsabbild (105) in 3-10 vertikale, rechteckige Umgebungsabbild-Segmente (111, 112, 113) geteilt wird.

**13.** Methode nach einem der vorangehenden Ansprüche, wobei die Umgebungsabbild-Segmente (111, 112, 113) einen jeweiligen Kreisausschnitt der Umgebung des Roboters (100) in horizontaler Richtung repräsentieren.

**14.** Methode nach einem der vorangehenden Ansprüche, wobei die Umgebungsabbild-Segmente (111, 112, 113) in einem Bereich von zumindest 5% ihrer Fläche teilüberlappend zum benachbarten Umgebungsabbild-Segment sind.

**15.** Ein Roboter (100), umfassend:
eine Kamera (101), eingerichtet zum Erstellen eines Umgebungsabbilds eines Teils der Umgebung des Roboters,
eine erste Bildauswertungseinheit (110), dazu eingerichtet, das Umgebungsabbild (105) in Umgebungsabbild-Segmente (111, 112, 113) aufzuteilen, wobei die Umgebungsabbild-Segmente (111, 112, 113) in ihrer Form vertikalen Säulen entsprechen, die entlang einer horizontalen Richtung aufgereiht sind,
eine zweite Bildauswertungseinheit (120), dazu eingerichtet, für die Umgebungsabbild-Segmente (111, 112, 113) einen Scoring-Wert zu bestimmen, der ein Konfidenzwert für das Vorhandenseins eines Stockwerkstableaus (140) in dem jeweiligen Umgebungsabbild-Segment (111, 112, 113) ist,
eine Positioniereinheit (130), dazu eingerichtet, den Roboter (100) in Abhängigkeit der Scoring-Werte der Umgebungsabbild-Segmente zu positionieren.
